Europäisches Patentamt

European Patent Office

Office européen des brevets

(11) Publication number: **0 268 684 B2**

## NEW EUROPEAN PATENT SPECIFICATION

(45) Date of publication of the new patent specification:
07.09.94

(51) Int. Cl.5: **F01M 11/10**, F01M 1/18, F02B 77/08

(21) Application number: **87902743.1**

(22) Date of filing: **21.04.87**

(86) International application number:
**PCT/JP87/00254**

(87) International publication number:
**WO 87/06648 (05.11.87 87/24)**

(54) MONITORING SYSTEM FOR MAINTENANCE OF CAR.

(30) Priority: **21.04.86 JP 91757/86**

(43) Date of publication of application:
**01.06.88 Bulletin 88/22**

(45) Publication of the grant of the patent:
**04.09.91 Bulletin 91/36**

(45) Mention of the opposition decision:
**07.09.94 Bulletin 94/36**

(84) Designated Contracting States:
**DE GB**

(56) References cited:
EP-A- 0 026 869    DE-A- 1 962 093
DE-A- 3 110 774    DE-A- 3 134 121
DE-A- 3 234 724    GB-A- 2 163 881
US-A- 4 031 363    US-A- 4 053 868

WO 86/01322

(73) Proprietor: **KABUSHIKI KAISHA KOMATSU SEISAKUSHO**
**3-6, Akasaka 2-chome**
**Minato-ku Tokyo 107 (JP)**

(72) Inventor: **KANEKO, Kiyoshi**
**2608-1, Nogawa**
**Miyamae-ku, Kawasaki-shi**
**Kanagawa-ken 213 (JP)**

(74) Representative: **Dr. Fuchs, Dr. Luderschmidt**
**Dr. Mehler, Dipl.-Ing Weiss Patentanwälte**
**Postfach 46 60**
**D-65036 Wiesbaden (DE)**

EP 0 268 684 B2

## Description

### TECHNICAL FIELD OF THE INVENTION

The present invention relates to a monitoring system for control and maintenance of cars,and is particularly concerned with a monitor system for control and maintenance of a car, indicating change of objects such as oil, filter and the like at each part of the car, and further indicating supply of grease and fuel.

In the US 4,031,363 a display apparatus for automotive vehicles is described which is capable to present on a display the time in hours and minutes and upon command other functions such as miles before service is required and days before service is required. The apparatus includes at least one logic integrated circuit for providing required frequency division of various inputs, a storage for accumulating information received from the integrated circuit and for retaining the information over a period of time even though power to the circuit is interrupted, a power supply and a display for displaying information on demand.

### TECHNICAL BACKGROUND OF THE INVENTION

Heretofore, for maintenance and control of a car, a timer for measuring accumulated operating hours of a car is provided, a time measured by the timer and a periodic time for changing each of objects such as oil, filter and the like which is specified in an instruction manual are compared with each other, and when the measured time reaches the periodic time, the particular object is subjected to change.

However, the aforementioned objects to change are rather numerous, and the periodic time is dependent on each of the objects to be changed. Threfore, if the change is left solely to a decision of an operator or controller of the car, then they will be overburdened to miss sometimes an opportunity to change the objects.

### SUMMARY OF THE INVENTION

The invention has been made in view of the above circumstances, and hence a primary object of the invention is to provide a monitor system for control and maintenance of a car which is capable positively of indicating maintenance informations about objects to be changed to an operator or controller of the car.

Another object of the invention is to provide a monitor system for control and maintenance of a car, wherein objects to be changed, even though those are numerous in number, can positively be changed by an operator or controller of the car at their respective optimum times. This is achieved by the features of claim 1

That is, in the monitor system for control and maintenance of a car according to the invention, the construction is such that when accumulated operating hours of a car measured by the time measuring means reach a predetermined periodic time whereat any of a plurality of objects is to be changed, an indication for changing the particular object is given on a display.

### BRIEF DESCRIPTION OF THE DRAWINGS

Fig. 1 is a block diagram representing one embodiment of a monitor system for control and maintenance of a car relating to the invention;
Fig. 2 is a font view showing details of a multi-display part shown in Fig. 1; and
Fig 3 is a flowchart for illustrating an operation of CPU shown in Fig. 1.

### DESCRIPTION OF THE PREFERRED EMBODIMENT

The invention will now be described in detail with reference to the accompanying drawings.

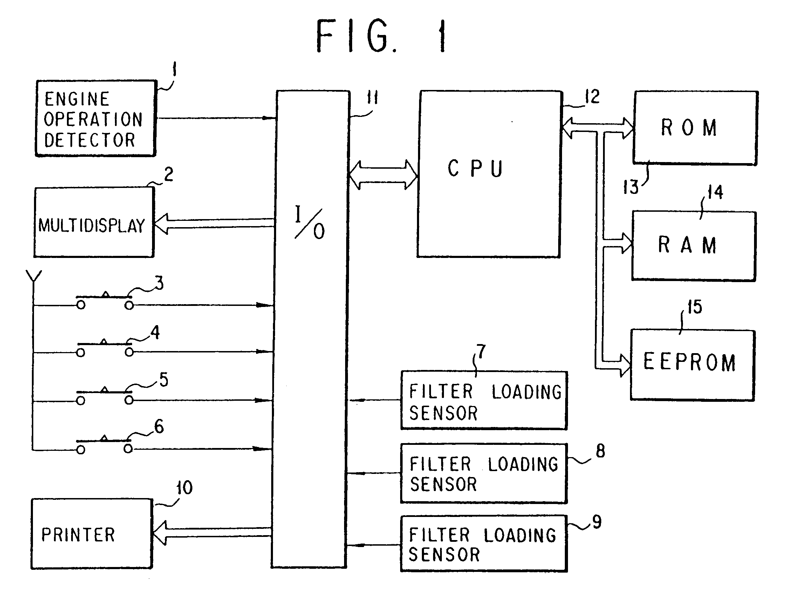

Fig. 1 is a block diagram representing one embodiment of a monitor system for control and maintenance of a car relating to the invention.

The system comprises an engine operation detector 1, a multi-display 2, time check switches 3, 4, a set switch 5, a cancel switch 6, filter loading sensors 7, 8, 9, a printer 10, an 1/0 port 11, a central processing unit (CPU) 12, ROM 13, RAM 14 and EEPROM 15.

The engine operation detector 1 is a unit for detecting whether or not an engine operates, consists, for example, of an oil pressure sensor for detecting an engine oil pressure, and generates a signal "1" at the time when operating the engine.

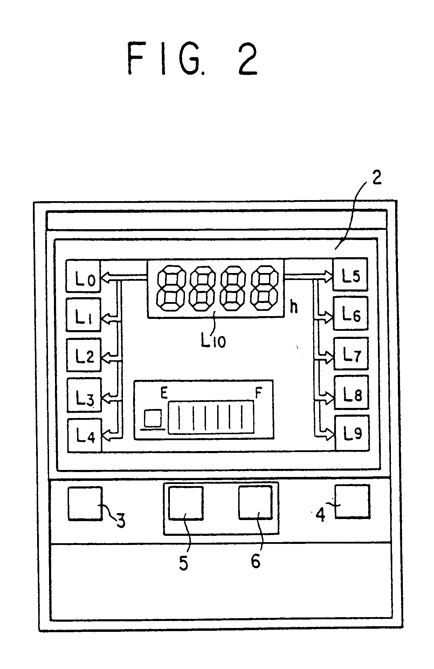

As shown in Fig. 2, for example, the multi-display 2 has display lamps $L_0$ to $L_9$ for respectively indicating an change of objects $A_0$ to $A_9$ to be changed such as oil, filter and the like, a display lamp $L_{10}$ for indicating a time in four digits and so forth. Now, examples of the objects $A_0$ to $A_9$ to be changed and their respective time intervals for change are given in the following Table 1.

Table 1

|  | | OIL | HOUR |  | OIL | HOUR |
|---|---|---|---|---|---|---|
| $A_0$ | | Engine oil | 250 | $A_5$ | Full-flow filter | 250 |
| $A_1$ | | Transmission oil | 1,000 | $A_5$ | Fuel filter | 500 |
| $A_2$ | | Hydraulic fluid | 2,000 | $A_7$ | Corrosion resistor | 500 |
| $A_3$ | | Final drive gear oil | 2,000 | $A_5$ | Transmission filter | 500 |
| $A_4$ | | Differential gear case oil | 2,000 | $A_9$ | Hydraulic fluid filter | 1,000 |

Each of the filter loading sensors 7, 8, 9 detects a loading of the aforementioned corrosion resistor $A_7$, transmission filter $A_5$ and hydraulic fluid filter $A_9$, the loading is then detected on a differential pressure between upstream side and downstream side of the filter which may arise due to a pressure loss by, for example, filter pass, and the signal "1" is generated at the time of this detection.

ROM 13 stores maintenance informations (time interval for change) programmed beforehand for the objects $A_0$ to $A_9$ to be changed and others therein, RAM 14 stores temporarily results obtained through arithmetic operation by CPU 12 to be described hereinafter, and EEPROM 15 stores past maintenance informations therein.

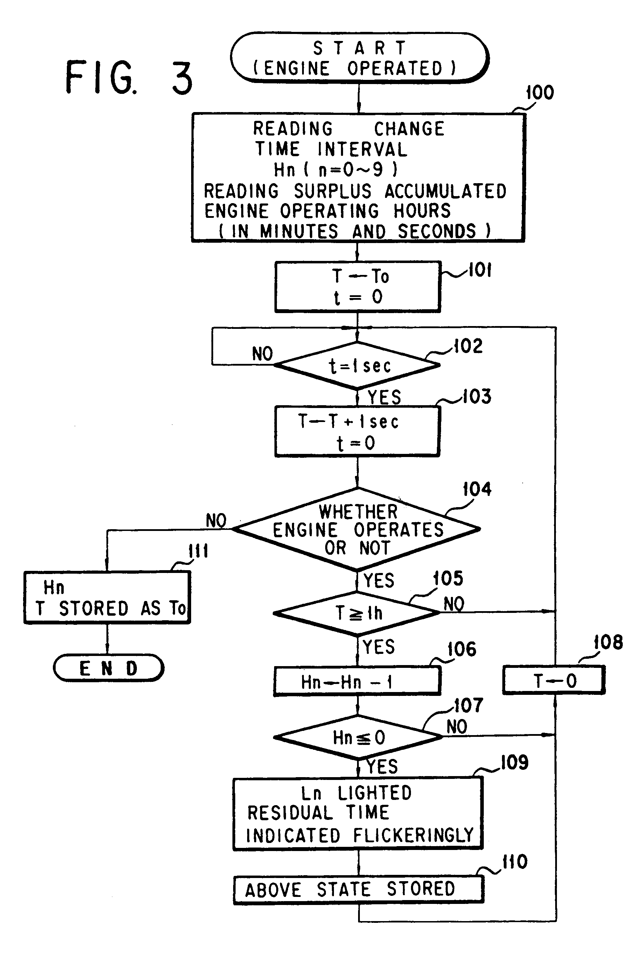

Next, an operation of CPU 12 will be described with reference to a flowchart given in Fig. 3.

Uppon inputting the signal "1" from the engine operation detector 1 through the 1/0 port 11, CPU 12 starts the following process:

First, a change time interval Hn of an object An (n = 0-9) to be changed is read, a surplus engine operating time $T_0$ less than one hour is read (Step 100), the read $T_0$ is then specified as T, and t is reset to 0 (Step 101).

Next, whether or not one second passed, or t = 1 sec. is decided (Step 102), and when one second passed, one second is added to the aforementioned T, and t is reset to 0 (Step 103).

Whether or not the engine is operating is discriminated in Step 104, and when operating, the process goes forward to Step 105. Whether or not T is one hour or over is discriminated in Step 105, and when it is less than one hour, the process returns to Step 102 and repeats Steps 102 to 105. When T exceeds one hour, one hour is subtracted from the exchange time interval Hn (Step 106), and whether or not each Hn is 0 or belowo is discriminated (Step 107).

If Hn is not 0 or belowo, then T is reset to 0 (Step 108), and the process returns again to Step 102. Thus, each Hn is subtracted one hour by one.

Then, when any one or a plurality of Hn become 0 or below 0, a display lamp Ln indicating the object to be exchanged having been 0 or below 0 is lighted, and a residual time (0 or minus time) is indicated flickeringly on a display lamp $L_{10}$ (Step 109). In Step 110 the aforementioned state is stored, that is, the display lamp Ln is kept lighting and flickering for the residual time, and the process returns to Step 102 through Step 108.

Then, when the engine stops, the change time interval Hn subtracted one hour by one successively is stored, and the surplus time T less than one hour is stored as $T_0$ (Step 111). When the engine comes into operation again, these Hn and $T_0$ are read in Step 100.

Meanwhile, the time check switch 3 shown in Fig. 1 and Fig. 2 is that for checking a residual time of the objects $A_0$ to $A_4$ the objects are then changed as $A_0 \rightarrow A_1 \rightarrow A_2 \rightarrow A_3 \rightarrow A_4 \rightarrow A_5 \rightarrow A_5$ ... ... according to a switch operation, and a time (Hn shown in Fig. 3) of the corresponding object An is displayed on the display lamp $L_{10}$. Then, in this case, a bar display is given on the display lamp Ln corresponding to the time-displayed object to be changed.

Similarly, the time check switch 3 is used for indicating a residual time for each of the objects $A_5$ to $A_9$ on the display lamp $L_{10}$.

Described next is the case where the residual time becomes 0 or below 0 the display lamp Ln is lighted, and the residual time is also indicated flickeringly thereon.

Such display indicates a change of the object to be changed, therefore a controller of the car will lose no time to renew the object which is so indicated thereon. Whenever the change is over, the set switch 5 (Fig. 1 and Fig. 2) is depressed for several seconds according to a change time interval of the object, now changed, indicated by depressing the time check switch before the engine restarts up.

According to the aforementioned switch operation, CPU 12 recognizes the object indicated for change as having been renewed, and a data indicating the next change time interval of the object is read out of ROM 13. Thus, the lighted display lamp goes out, and a new change time interval is indicated on the display lamp $L_{10}$.

Then, the cancel switch 6 functions where the set switch 5 is operated erroneously, thereby reverting to the state before the set switch 5 was operated. Further, when the filter loading sensors 7, 8, 9 detect loading, CPU 12 flickers the corresponding display lamp, thereby advising an operator or controller of car thereof. Then, past maintenance informations on hours for changing each object or the like is written in EEPROM 15, and thus the maintenance informations can be printed out to the printer 10 as occasion demands.

## Claims

1. A control and maintenance system in a car comprising:

   a time measuring means (12)which measures the accumulated operating hours of the car;

   a storage means (13, 14, 15) that stores the predetermined periodic times for changing of different wearing parts of a car;

   a subtraction means (12) that subtracts the accumulated operating hours of a car engine from the predetermined period of time for changing the respective wearing part;

   a means for generating a signal (11);

   a display means (2); and

   a means (3) cooperating with said display means, for actuating said display means for displaying a result of subtraction by said subtraction means selectively for each wearing part as indication of remaining hours to expiration of said predetermined periodic time;

   said means for generating a signal (11) producing a signal for each wearing part to be changed when its predetermined periodic time is equalled by the accumulated operating hours of the engine;

   characterized in that
   - said time measuring means (12) is responsive to the oil pressure of the engine;
   - and in that said display means (2) indicates each particular wearing part to be changed when its corresponding signal has being triggered by said means for generating a signal (11).

2. Control and maintenance system according to claim 1, characterized in that a further set switch (5) is provided for setting a predetermined periodic time whereat the object is to be exchanged next after exchanging the object indicated on said display means.

## Patentansprüche

1. Kontroll- und Wartungssystem in einem Auto mit einem Mittel zur Zeitmessung (12) welches die aufgelaufene Betriebszeit des Autos mißt, einem Speichermittel (13, 14, 15), das die vorgegebene Zeitspanne zum Austausch verschiedener Verschleißteile des Autos speichert, einem Mittel zur Differerzbildung (12), das die aufgelaufene Betriebszeit eines Automotors von der vorgegebenen Zeitspanne zum Wechseln der entsprechenden Verschleißteile abzieht, einem Mittel zur Signalerzeugung (11), einem Anzeigemittel (2), und einem mit dem Anzeigemittel zusammenwirkenden Mittel (3) zur Betätigung der Anzeigemittel, um ein Ergebnis der Differenzbildung durch das Mittel zur Differenzbildung wahlweise für jedes Verschließteil als eine Angabe der verbleibenden Stunden bis zum Ablauf der vorgegebenen Zeitspanne anzuzeigen, wobei die Mittel zur Signalerzeugung (11) für jedes auszutauschende Verschleißteil ein Signal erzeugen, wenn dessen vorbestimmte Zeitspanne durch die aufgelaufene Betriebszeit des Motors erreicht ist,

   dadurch gekennzeichnet, daß

   das Zeitmeßmittel (12) auf den Öldruck des Motors anspricht, und daß das Anzeigemittel (2) jedes einzelne auszutauschende Verschleißteil anzeigt, wenn dessen entsprechendes Signal vom Signalerzeugungsmittel (11) ausgelöst worden ist.

**2.** Kontroll- und Wartungssystem nach Anspruch 1, dadurch gekennzeichnet, daß ein weiterer Einstellschalter (5) zum Einstellen einer vorgegebenen Zeitspanne vorgesehen ist, nach der das Teil als nächstes nach dem Austauschen des auf dem Anzeigemittel angezeigten Teiles auszutauschen ist.

**Revendications**

**1.** Système de contrôle et de maintenance dans une voiture comportant: un moyen pour le chronométrage (12) qui mesure les heures de fonctionnement accumulées de la voiture, un moyen pour la mémorisation (13, 14, 15) qui mémorise les durées prédéderminées pour le remplacement de pièces d'usure différentes d'une voiture, un moyen soustractif (12) qui soustrait les heures de fonctionnement accumulées d'un moteur du durée prédéterminée pour le remplacement d'une pièce d'usure respective, un moyen pour la génération de signaux (11), un moyen d'affichage (2), et un moyen (3) concourant avec ledit moyen d'affichage pour la mise en action dudit moyen d'affichage pour visualiser sélectivement un résultat de la soustraction obtenu par ledit moyen de soustraction pour chacune des pièces d'usure comme heures résiduelles restant jusqu'à la fin de ladite durée prédéterminée, ledit moyen pour la génération de signaux (11) engendrant un signal pour chaque pièce d'usure qu'il faut remplacer quand les heures de fonctionnement accumulées du moteur ont atteintes la durée prédéterminée de ladite pièce d'usure,
caractérisé en ce que
ledit moyen pour le chronométrage (12) répond à la pression d'huile du moteur et en ce que ledit moyen d'affichage (2) montre chaque pièce d'usure particulière qu'il faut remplacer, lorsque son signal correspondant a été déclenché par ledit moyen pour la génération de signaux (11).

**2.** Système de contrôle et de maintenance suivant la revendication 1, caractérisé en ce que l'on a pourvu un autre bouton de réglage (5) pour régler une durée prédéterminée à quoi il faut échanger l'objet la prochaine fois après l'échangement de l'objet visualisé sur ledit moyen d'affichage (2).

# FIG. 1

EP 0 268 684 B2

# F I G. 2

FIG. 3

START
(ENGINE OPERATED)

100

READING    CHANGE
TIME INTERVAL
Hn ( n=0~9 )
READING SURPLUS ACCUMULATED
ENGINE OPERATING HOURS
( IN MINUTES AND SECONDS )

101

$T \leftarrow To$
$t = 0$

102

NO ← $t = 1\,sec$

YES

103

$T \leftarrow T + 1\,sec$
$t = 0$

104

NO ← WHETHER
ENGINE OPERATES
OR NOT

YES

105

$T \geqq 1h$ → NO

YES

111

Hn
T STORED AS To

END

106

$Hn \leftarrow Hn - 1$

108

$T \leftarrow 0$

107

$Hn \leqq 0$ → NO

YES

109

Ln LIGHTED
RESIDUAL TIME
INDICATED FLICKERINGLY

110

ABOVE STATE STORED